# EUROPEAN PATENT APPLICATION

(11) **EP 4 841 128 A1**
(43) Date of publication of application: **18.11.2026**
(21) Application number: 24917123.2
(22) Date of filing: 28.10.2024
(51) Int. Cl.: F16F 6/00, B25J 15/06, H01F 7/02

(54) **MAGNET DAMPER FOR SUCTION PAD**

(30) Priority: 09.01.2024 JP 2024001222
(71) Applicant: SMC Corporation, Tokyo 104-0031 (JP)
(72) Inventor: KAWANO, Yoshikazu, 277-0871 Chiba (JP)
(74) Representative: Keil & Schaafhausen Patentanwälte PartGmbB
(86) International application number: PCT/JP2024/038262
(87) International publication number: WO 2025/150249

(57) **Abstract**

The outer circumferential surface (18a) and the inner circumferential surface (18b) of a fixed magnet (18), which is attached to a body (12), comprise cylindrical surfaces each having a uniform diameter. The outer circumferential surface (34a) of a movable magnet (34), which constitutes a movable part (22), comprises a cylindrical surface having a uniform diameter. The inner circumferential surface (34b) of the movable magnet comprises a conical curved surface. The fixed magnet and the movable magnet are magnetized in the axial direction, and the axial polarity of the fixed magnet is the same as the axial polarity of the movable magnet.

## Description

### TECHNICAL FIELD

The present invention relates to a magnetic damper (magnet damper) for a suction pad, which mitigates pressure when the suction pad contacts a workpiece.

### BACKGROUND ART

In general, in a process of suctioning a workpiece, a pressing operation for pressing a suction pad against the workpiece is required. In order to mitigate the pressure applied to the workpiece at this time, a suction device including a magnetic damper has been known.

For example, JP 2002-054671 A describes a suction pad holder including a cylindrical fixed shaft and a cylindrical columnar movable shaft inserted into the fixed shaft, and magnets are arranged on an outer circumferential surface of the movable shaft and an inner circumferential surface of the fixed shaft, respectively. The magnet of the movable shaft and the magnet of the fixed shaft are each divided in the circumferential direction, and are arranged such that different magnetic poles face each other.

According to JP 2002-054671 A, when the magnet of the movable shaft and the magnet of the fixed shaft are displaced in the axial direction, the magnetic lines of force generated at the axially overlapping portion of both magnets do not exert a force in the axial direction, and only the axial component force of the oblique magnetic lines of force generated at the end portions of both magnets exerts a force in the axial direction. Therefore, even if there is a variation in the stroke when the suction pad is pressed against the workpiece, the suction pad can be pressed against the workpiece with a constant force.

### SUMMARY OF THE INVENTION

However, it is considered that the axial component force of the oblique magnetic lines of force generated at the end portions of the magnet of the movable shaft and the magnet of the fixed shaft is substantially constant in an extremely limited stroke range.

When a magnet divided in the circumferential direction is used as in the suction pad holder of JP 2002-054671 A, it is possible to suppress the deviation in the rotational direction between the magnet of the movable shaft and the magnet of the fixed shaft. In order to prevent the rotation even when an excessive force is applied, it is necessary to provide a mechanical rotation preventing mechanism. In the case where the mechanical rotation preventing mechanism is provided in the suction pad holder of JP 2002-054671 A, the movable shaft moves in the axial direction in a state where a contact pressure is applied in the rotation direction, and therefore, there is a concern that a large sliding resistance is generated.

An object of the present invention is to solve the aforementioned problems.

A magnetic damper for a suction pad according to the present invention includes a body having a tubular shape, and a movable portion supported by the body so as to be displaceable in an axial direction of the body, the magnetic damper for the suction pad being configured to mitigate pressure when the suction pad comes into contact with a workpiece, the pressure being mitigated by a magnetic force acting between a fixed magnet attached to the body and a movable magnet constituting the movable portion, the fixed magnet and the movable magnet each having a tubular shape. An outer circumferential surface and an inner circumferential surface of the fixed magnet are formed of cylindrical surfaces having uniform diameters, respectively, an outer circumferential surface of the movable magnet is formed of a cylindrical surface having a uniform diameter, an inner circumferential surface of the movable magnet is formed of a conical curved surface. The fixed magnet and the movable magnet are magnetized in the axial direction, and a polarity of the fixed magnet in the axial direction is same as a polarity of the movable magnet in the axial direction.

According to the above-described magnetic damper for the suction pad, the fixed magnet and the movable magnet are combined. The fixed magnet has the outer circumferential surface and the inner circumferential surface formed of the cylindrical surfaces having the uniform diameters, respectively, and magnetized in the axial direction. The movable magnet has the outer circumferential surface formed of the cylindrical surface having the uniform diameter and the inner circumferential surface formed of the conical curved surface and magnetized in the axial direction. Therefore, the magnetic force in the axial direction acting between the fixed magnet and the movable magnet can be set to a constant value regardless of the displacement amount of the movable portion. Moreover, since no circumferential magnetic force acts between the fixed magnet and the movable magnet, a mechanical rotation preventing mechanism can be provided between the body and the movable portion without increasing the sliding resistance of the movable portion.

### BRIEF DESCRIPTION OF DRAWINGS

[FIG. 1] FIG. 1 is a cross-sectional view of a magnetic damper for a suction pad according to a first embodiment of the present invention;
[FIG. 2] FIG. 2 is an exploded view of the parts of the magnetic damper for the suction pad shown in FIG. 1;
[FIG. 3] FIG. 3 is a cross-sectional view of the magnetic damper for the suction pad shown in FIG. 1 when a movable portion is displaced upward;
[FIG. 4] FIG. 4 is a graph showing a magnetic force acting in an axial direction between a fixed magnet and a movable magnet of the magnetic damper for the suction pad shown in FIG. 1, in comparison with a case where the movable magnet is formed in a cylindrical shape;
[FIG. 5] FIG. 5 is a cross-sectional view of a magnetic damper for a suction pad according to a second embodiment of the present invention;
[FIG. 6] FIG. 6 is an exploded view of the parts of the magnetic damper for the suction pad shown in FIG. 5;
[FIG. 7] FIG. 7 is a cross-sectional view of the magnetic damper for the suction pad shown in FIG. 5 when a movable portion is displaced upward;
[FIG. 8] FIG. 8 is a cross-sectional view of a magnetic damper for a suction pad according to a third embodiment of the present invention;
[FIG. 9] FIG. 9 is an exploded view of the parts of the magnetic damper for the suction pad shown in FIG. 8; and
[FIG. 10] FIG. 10 is a cross-sectional view of the magnetic damper for the suction pad shown in FIG. 8 when a movable portion is displaced upward.

### DETAILED DESCRIPTION OF THE INVENTION

A plurality of preferred embodiments of a magnetic damper for a suction pad according to the present invention will be described in detail below with reference to the accompanying drawings. In the following description, when terms in relation to up and down directions are used, for the sake of convenience, such terms refer to the directions shown in the drawings, however, the actual arrangement of the constituent members and the like is not necessarily limited to this feature.

### (First Embodiment)

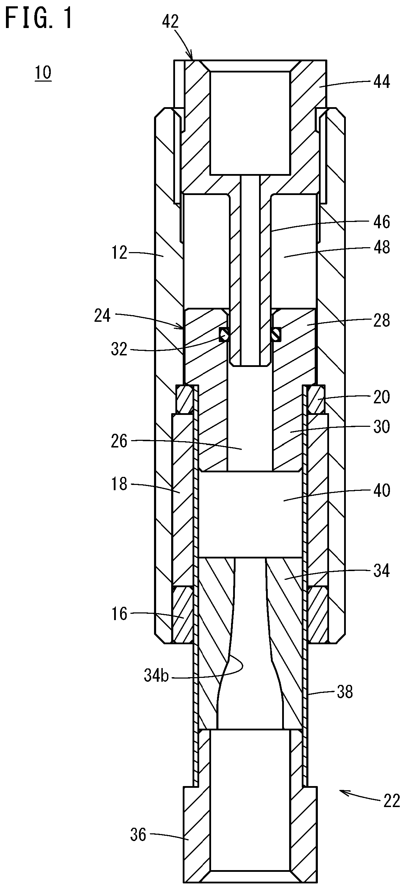

A description will be given with reference to FIGS. 1 to 4 concerning a magnetic damper 10 for a suction pad according to a first embodiment of the present invention.

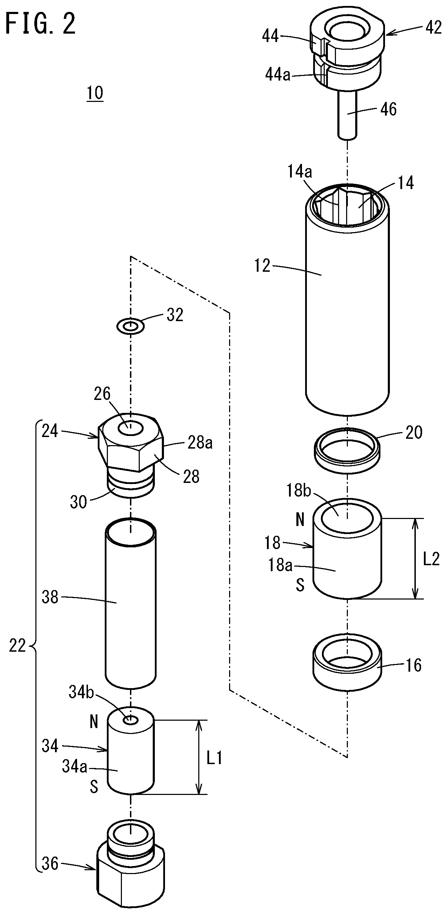

As shown in FIGS. 1 and 2, the magnetic damper 10 for the suction pad includes a tubular body 12 and a movable portion 22 supported by the body 12 so as to be displaceable in the axial direction of the body 12. The body 12 is supported by a robot arm or a transporting device (not shown). The movable portion 22 includes a piston 24, a movable magnet 34, a pad adapter 36, and a piston tube 38.

The piston 24 is made of a paramagnetic material such as an aluminum alloy, and is slidably disposed inside the body 12. The piston 24 has a hole portion 26 that penetrates the center of the piston 24 in the axial direction. The piston 24 has a flange portion 28 projecting radially outward and a shaft portion 30 extending downward from the flange portion 28. The flange portion 28 of the piston 24 has a generally hexagonal outer configuration with each side curved inward when cut along a plane perpendicular to the axis of the piston 24. The flange portion 28 of the present embodiment has a cross section of a hexagonal configuration, but may have any polygonal cross-section. The flange portion 28 of the piston 24 constitutes a part of a mechanical rotation preventing mechanism described later.

The movable magnet 34 is disposed below the piston 24 and is coupled to the piston 24 via the piston tube 38. The movable magnet 34 is formed in a tubular shape having a length L1. The movable magnet 34 is magnetized in the axial direction (up and down direction). An outer circumferential surface 34a of the movable magnet 34 is a cylindrical surface having a uniform diameter, and an inner circumferential surface 34b of the movable magnet 34 is a conical curved surface having a diameter gradually increasing from the upper side toward the lower side. The thickness of the movable magnet 34 gradually decreases from the upper side toward the lower side.

The pad adapter 36 is made of a paramagnetic material such as an aluminum alloy and formed in a tubular shape. The pad adapter 36 is disposed in contact with the lower end of the movable magnet 34, and is connected to the piston 24 via the piston tube 38 together with the movable magnet 34. The pad adapter 36 projects downward from the body 12. The amount of projection of the pad adapter 36 varies according to the displacement of the movable portion 22. A suction pad (not shown) is attached to the lower end of the pad adapter 36.

The piston tube 38 is formed of a non-magnetic material of austenitic stainless steel in a thin-walled cylindrical shape. The shaft portion 30 of the piston 24 is press-fitted into the upper part of the piston tube 38, the movable magnet 34 is press-fitted into the piston tube 38 over the entire length of the movable magnet 34, and the upper part of the pad adapter 36 is press-fitted into the lower part of the piston tube 38. Accordingly, a vacuum passage 40 for generating vacuum pressure is formed inside the movable portion 22.

The upper inner surface of the body 12 has a piston guide surface 14 for guiding the flange portion 28 of the piston 24. The piston guide surface 14 has recessed portions 14a for receiving projecting portions 28a corresponding to the respective vertices of the polygonal cross section of the flange portion 28, and constitutes a mechanical rotation preventing mechanism together with the flange portion 28. The mechanical rotation preventing mechanism constituted by the flange portion 28 of the piston 24 and the piston guide surface 14 of the body 12 suppresses the turning of the movable portion 22 around the axial center of the body 12.

A fixed magnet 18 is mounted on the lower inner surface of the body 12 via a bush 16. The fixed magnet 18 is formed in a tubular shape having a length L2. An outer circumferential surface 18a and An inner circumferential surface 18b of the fixed magnet 18 are both cylindrical surfaces having uniform diameters, respectively. The fixed magnet 18 is magnetized in the axial direction (up and down direction). The fixed magnet 18 has the same axial polarity as the movable magnet 34. In the present embodiment, the upper part of fixed magnet 18 and the upper part of the movable magnet 34 are N poles, and the lower part of fixed magnet 18 and the lower part of the movable magnet 34 are S poles. The length L2 of the fixed magnet 18 is substantially the same as the length L1 of the movable magnet 34.

The piston tube 38 is inserted into the interior of the fixed magnet 18. A ring-shaped stopper 20 is mounted on the inner surface of the body 12 at the axial center thereof via a groove. The flange portion 28 of the piston 24 abuts against the stopper 20, thereby restricting downward displacement of the movable portion 22. When the flange portion 28 of the piston 24 abuts against the stopper 20, the amount of projection of the pad adapter 36 is maximized. At this time, the length of the overlap between the fixed magnet 18 and the movable magnet 34 in the axial direction is minimized.

A tube adapter 42 is attached to the upper part of the body 12. The tube adapter 42 includes a main body portion 44 and a vacuum inlet portion 46 in the form of an elongated tube extending downward from the main body portion 44. A tube (not shown) extending from a vacuum generator (not shown) is connected to the main body portion 44 of the tube adapter 42. The vacuum inlet portion 46 of the tube adapter 42 is inserted into the hole portion 26 of the piston 24. An O-ring 32 mounted in the hole portion 26 of the piston 24 is brought into sliding contact with the vacuum inlet portion 46 of the tube adapter 42. Vacuum pressure is introduced into the vacuum passage 40 of the movable portion 22 through the tube adapter 42, and the workpiece can be suctioned by the suction pad attached to the pad adapter 36.

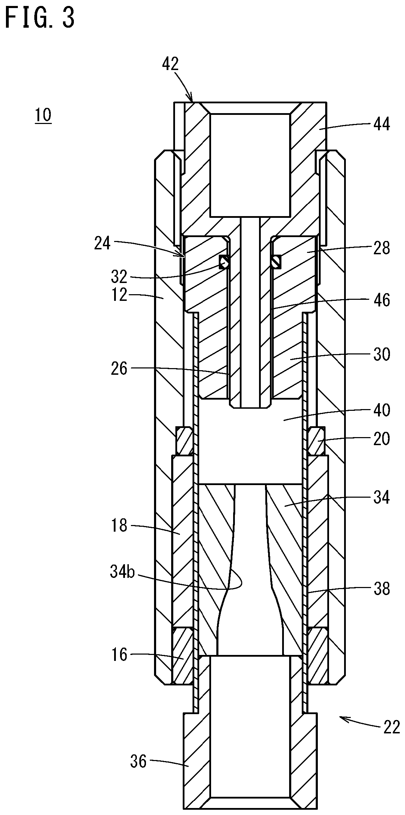

As shown in FIG. 3, the flange portion 28 of the piston 24 abuts against the main body portion 44 of the tube adapter 42, thereby restricting upward displacement of the movable portion 22. When the flange portion 28 of the piston 24 abuts against the tube adapter 42, the amount of projection of the pad adapter 36 is minimized. At this time, the length of the overlap between the fixed magnet 18 and the movable magnet 34 in the axial direction is maximized. The movable portion 22 can be displaced between a position where the flange portion 28 of the piston 24 abuts against the stopper 20 and a position where the flange portion 28 of the piston 24 abuts against the tube adapter 42.

The side surface of the main body portion 44 of the tube adapter 42 has a groove portion 44a for releasing pressure. The pressure of a back pressure chamber 48 partitioned by the body 12, the tube adapter 42 and the flange portion 28 of the piston 24 is always kept at the atmospheric pressure by the action of the groove portion 44a of the tube adapter 42. Therefore, even when the movable portion 22 is displaced, the pressure in the back pressure chamber 48 does not affect the movement of the movable portion 22.

When the vacuum pressure is introduced into the vacuum passage 40 of the movable portion 22, the balance of the force in the up and down direction due to the atmospheric pressure acting on the movable portion 22 is lost, and the movable portion 22 may be unintentionally displaced upward. In order to address this problem, the outer diameter of the vacuum inlet portion 46 of the tube adapter 42 is set to a small value to some extent. In the present embodiment, the outer diameter of the vacuum inlet portion 46 is about one fifth of the outer diameter of the body 12.

The movable magnet 34 is biased downward by a magnetic force acting in the axial direction between the movable magnet 34 and the fixed magnet 18. When no external force is applied to the pad adapter 36, the piston 24 abuts against the stopper 20. The magnetic force acting in the axial direction between the fixed magnet 18 and the movable magnet 34 appears as a force that causes the upper end of the movable magnet 34 to move away from the upper end of the fixed magnet 18 and a force that causes the upper end of the movable magnet 34 to move toward the lower end of the fixed magnet 18.

By combining the fixed magnet 18 and the movable magnet 34 having the above-described shapes, the magnetic force acting in the axial direction between the fixed magnet 18 and the movable magnet 34 can be set to a constant value regardless of the displacement amount of the movable portion 22. The constant value is set to a value that does not damage the workpiece. Further, since the magnetic force is constant, the load applied to the workpiece does not vary.

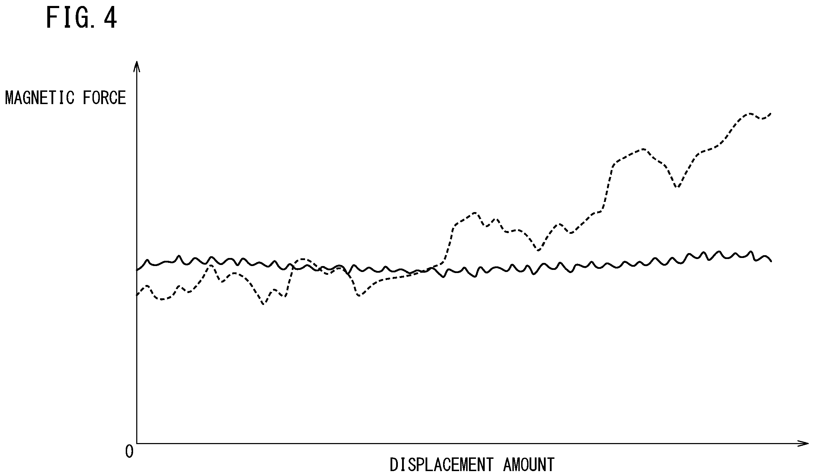

FIG. 4 is a graph showing a magnetic force acting in the axial direction between the fixed magnet 18 and the movable magnet 34, in comparison with a case where the movable magnet 34 is formed in a cylindrical shape. The horizontal axis represents the displacement amount of the movable portion 22. Specifically, the amount of upward displacement of the movable portion 22 from a reference position is represented, where the reference position is the position of the movable portion 22 when the amount of projection of the pad adapter 36 is maximum. The vertical axis represents the magnetic force acting in the axial direction between the fixed magnet 18 and the movable magnet 34. The solid line indicates the magnetic force in the present embodiment, and the dotted line indicates the magnetic force in the case where the movable magnet 34 is formed in a cylindrical shape.

As understood from FIG. 4, when the movable magnet 34 is formed in a cylindrical shape, the magnetic force acting in the axial direction between the fixed magnet 18 and the movable magnet 34 is not constant, and tends to increase as the displacement amount of the movable portion 22 increases, particularly in a region where the displacement of the movable portion 22 is large. Therefore, when the displacement of the movable portion 22 increases, the force that biases the movable magnet 34 downward increases. In contrast, in the present embodiment, the magnetic force acting in the axial direction between the fixed magnet 18 and the movable magnet 34 is a constant value in the entire displacement region of the movable portion 22.

Next, the operation of the magnetic damper 10 for the suction pad when a workpiece is suctioned will be described. When a command to suction the workpiece is issued, the robot arm or the transporting device is driven, and the magnetic damper 10 for the suction pad to which the suction pad is attached approaches the workpiece.

The robot arm or the transporting device is driven and controlled such that the magnetic damper 10 for the suction pad reaches a target position. In this case, the target position of the magnetic damper 10 for the suction pad is set such that the suction pad is in contact with the workpiece and the amount of projection of the pad adapter 36 is an intermediate value between the maximum value and the minimum value. After the suction pad is brought into contact with the workpiece and the magnetic damper 10 for the suction pad is displaced to the target position, the vacuum pressure is introduced into the vacuum passage 40. This makes it possible to set the force pressing the workpiece to the above-described constant value. After the vacuum pressure introduced into the vacuum passage 40 acts on the workpiece to secure a workpiece suction holding state, the force pressing the workpiece is released, and the magnetic damper 10 for the suction pad that suctions and holds the workpiece moves to a predetermined place.

Even if the accuracy of control for making the magnetic damper 10 for the suction pad reach the target position is low, or even if there is a variation in the size of the workpiece, the magnitude of the force for pressing the workpiece does not vary, and the workpiece can be pressed with a stable force.

In the present embodiment, the mechanical rotation preventing mechanism is constituted by the flange portion 28 of the piston 24 and the piston guide surface 14 of the body 12, and the piston guide surface 14 has the recessed portions 14a for receiving the projecting portions 28a corresponding to the respective vertices of the polygonal cross section of the flange portion 28. However, the mechanical rotation preventing mechanism is not limited to such a configuration.

According to the present embodiment, the magnetic force in the axial direction acting between the fixed magnet 18 and the movable magnet 34 can be set to a constant value regardless of the displacement amount of the movable portion 22. Moreover, a mechanical rotation preventing mechanism can be provided between the body 12 and the movable portion 22 without increasing the sliding resistance of the movable portion 22.

### (Second Embodiment)

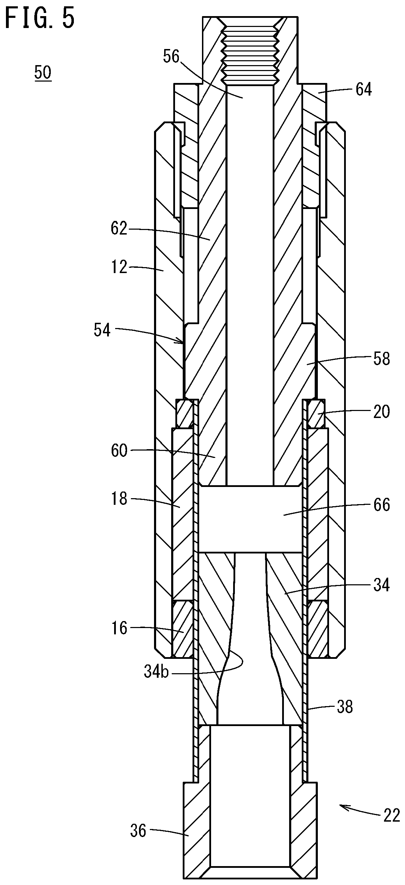

A description will be given with reference to FIGS. 5 to 7 concerning a magnetic damper 50 for a suction pad according to a second embodiment of the present invention. The constituent elements that are the same as or equivalent to those of the magnetic damper 10 for the suction pad according to the first embodiment, are denoted by the same reference numerals, and detailed description thereof is omitted.

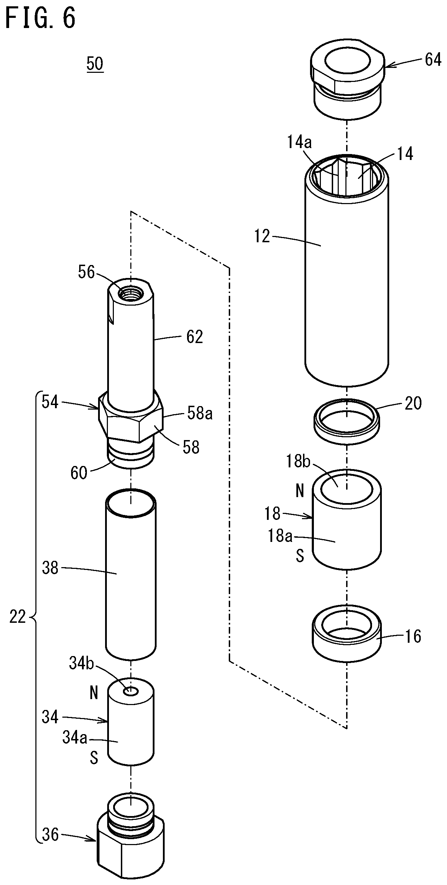

As shown in FIGS. 5 and 6, the magnetic damper 50 for the suction pad includes the tubular body 12 and the movable portion 22 supported by the body 12 so as to be displaceable in the axial direction of the body 12. The movable portion 22 includes a piston 54, the movable magnet 34, the pad adapter 36, and the piston tube 38.

The movable magnet 34 is magnetized in the axial direction. The outer circumferential surface 34a of the movable magnet 34 is a cylindrical surface having a uniform diameter, and the inner circumferential surface 34b of the movable magnet 34 is a conical curved surface having a diameter gradually increasing from the upper side toward the lower side. The fixed magnet 18 attached to the body 12 is magnetized in the axial direction. The outer circumferential surface 18a and the inner circumferential surface 18b of the fixed magnet 18 are both cylindrical surfaces having uniform diameters, respectively. The fixed magnet 18 has the same axial polarity as the movable magnet 34.

The piston 54 has a hole portion 56 penetrating the center of the piston 54 in the axial direction. The piston 54 includes a flange portion 58 that projects radially outward, a lower shaft portion 60 that extends downward from the flange portion 58, and an upper shaft portion 62 that extends upward from the flange portion 58. The flange portion 58 of the piston 54 has a generally hexagonal outer configuration with each side curved inward when cut along a plane perpendicular to the axis of the piston 54. The upper inner surface of the body 12 has the piston guide surface 14 for guiding the flange portion 58 of the piston 54. The piston guide surface 14 has the recessed portions 14a for receiving projecting portions 58a corresponding to the respective vertices of the polygonal cross section of the flange portion 58, and constitutes a mechanical rotation preventing mechanism together with the flange portion 58.

A ring-shaped guide bush 64 is attached to the upper end of the body 12. The upper shaft portion 62 of the piston 54 is inserted through the guide bush 64, and a portion of the upper shaft portion 62 projects upward from the guide bush 64. A tube (not shown) extending from a vacuum generator (not shown) is connected to the upper shaft portion 62 of the piston 54. The amount of projection of the upper shaft portion 62 of the piston 54 varies according to the displacement of the movable portion 22. The tube is displaced integrally with the movable portion 22.

The lower shaft portion 60 of the piston 54 is press-fitted into the upper part of the piston tube 38, the movable magnet 34 is press-fitted into the piston tube 38 over the entire length of the movable magnet 34, and the upper part of the pad adapter 36 is press-fitted into the lower part of the piston tube 38. Accordingly, a vacuum passage 66 for generating vacuum pressure is formed inside the movable portion 22. Vacuum pressure from a vacuum generator (not shown) is introduced into the vacuum passage 66 of the movable portion 22.

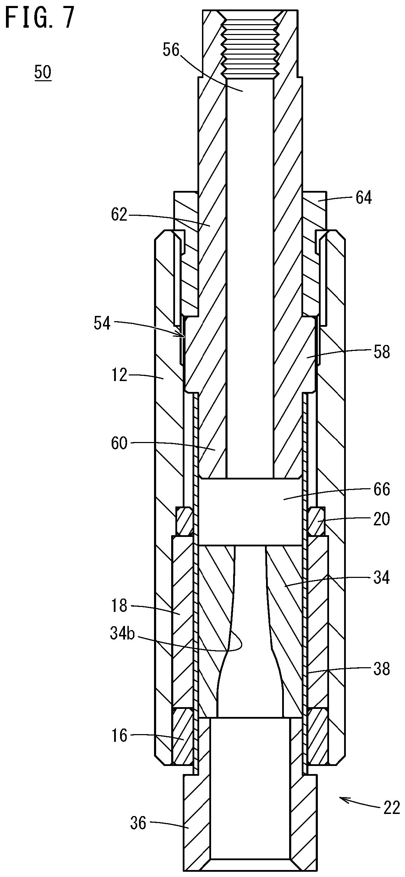

As shown in FIG. 5, when the flange portion 58 of the piston 54 abuts against the stopper 20, the amount of projection of the pad adapter 36 is maximized. As shown in FIG. 7, when the flange portion 58 of the piston 54 abuts against the guide bush 64, the amount of projection of the pad adapter 36 is minimized.

### (Third Embodiment)

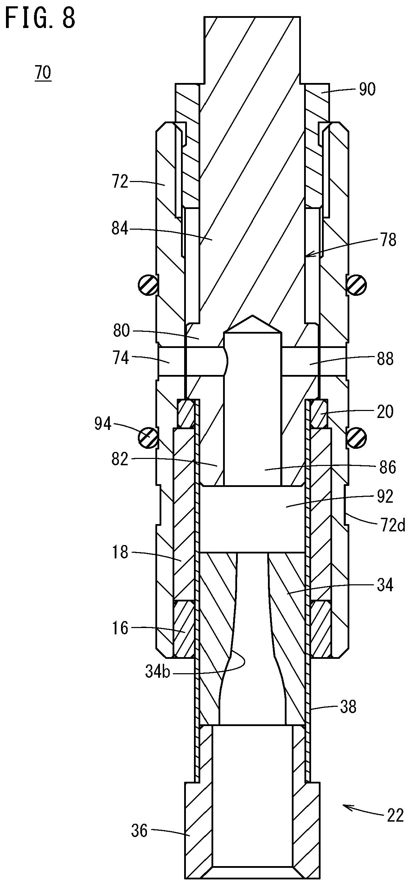

A description will be given with reference to FIGS. 8 to 10 concerning a magnetic damper 70 for a suction pad according to a third embodiment of the present invention. The constituent elements that are the same as or equivalent to those of the magnetic damper 10 for the suction pad according to the first embodiment, are denoted by the same reference numerals, and detailed description thereof may be omitted.

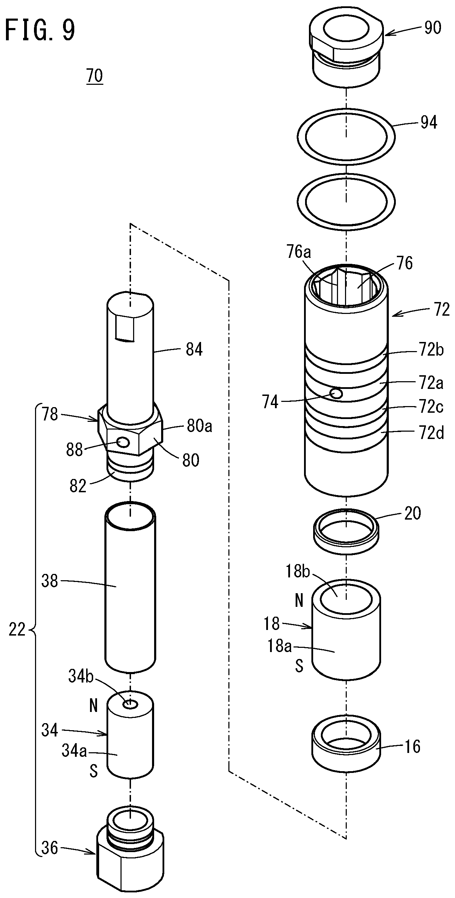

As shown in FIGS. 8 and 9, the magnetic damper 70 for the suction pad includes a tubular body 72 and the movable portion 22 supported by the body 72 so as to be displaceable in the axial direction of the body 72. The movable portion 22 includes a piston 78, the movable magnet 34, the pad adapter 36, and the piston tube 38.

The body 72 has a first groove portion 72a, a pair of second groove portions 72b and 72c, and a third groove portion 72d. The first groove portion 72a, the pair of second groove portions 72b and 72c, and the third groove portion 72d surround the outer circumferential surface of the body 72. One of the second groove portions 72b is formed above the first groove portion 72a, and the other second groove portion 72c is formed below the first groove portion 72a. The third groove portion 72d is formed below the other second groove portion 72c. The body 72 has a pair of vacuum inlet holes 74 extending from the inner circumferential surface of the body 72 to the bottom surface of the first groove portion 72a.

A tube (not shown) extending from a vacuum generator (not shown) is connected to the vacuum inlet holes 74. Seal rings 94 are mounted in the second groove portions 72b and 72c. The seal rings 94 each prevent the vacuum pressure from decreasing when the vacuum pressure is supplied from the vacuum generator to the vacuum inlet holes 74. The body 72 is supported by a robot arm or a transporting device (not shown) using a set screw (not shown) that engages the third groove portion 72d.

The movable magnet 34 is magnetized in the axial direction. The outer circumferential surface 34a of the movable magnet 34 is a cylindrical surface having a uniform diameter, and the inner circumferential surface 34b of the movable magnet 34 is a conical curved surface having a diameter gradually increasing from the upper side toward the lower side. The fixed magnet 18 attached to the body 72 is magnetized in the axial direction. The outer circumferential surface 18a and the inner circumferential surface 18b of the fixed magnet 18 are both cylindrical surfaces having uniform diameters, respectively. The fixed magnet 18 has the same axial polarity as the movable magnet 34.

The piston 78 includes a flange portion 80 that projects radially outward, a lower shaft portion 82 that extends downward from the flange portion 80, and an upper shaft portion 84 that extends upward from the flange portion 80. The flange portion 80 of the piston 78 has a generally hexagonal outer configuration with each side curved inward when cut along a plane perpendicular to the axis of the piston 78. The inner surface of the body 72 has a piston guide surface 76 for guiding the flange portion 80 of the piston 78. The piston guide surface 76 has recessed portions 76a for receiving projecting portions 80a corresponding to the respective vertices of the polygonal cross section of the flange portion 80, and constitutes a mechanical rotation preventing mechanism together with the flange portion 80.

The piston 78 has a blind vertical hole 86 that opens to the lower surface of the piston 78, and a pair of lateral holes 88 that open to the side surface of the flange portion 80 of the piston 78. The vertical hole 86 of the piston 78 is connected to the lateral holes 88 of the piston 78. The lateral holes 88 of the piston 78 communicate with the vacuum inlet holes 74 of the body 72 through a clearance between the body 72 and the piston 78. A ring-shaped guide bush 90 is attached to the upper end of the body 72. The upper shaft portion 84 of the piston 78 is inserted through the guide bush 90, and a portion of the upper shaft portion 84 projects upward from the guide bush 90.

The lower shaft portion 82 of the piston 78 is press-fitted into the upper part of the piston tube 38, the movable magnet 34 is press-fitted into the piston tube 38 over the entire length of the movable magnet 34, and the upper part of the pad adapter 36 is press-fitted into the lower part of the piston tube 38. A vacuum passage 92 including the vertical hole 86 and the lateral holes 88 of the piston 78 is formed inside the movable portion 22. Vacuum pressure from a vacuum generator (not shown) is introduced into the vacuum passage 92 of the movable portion 22 through the vacuum inlet holes 74 of the body 72.

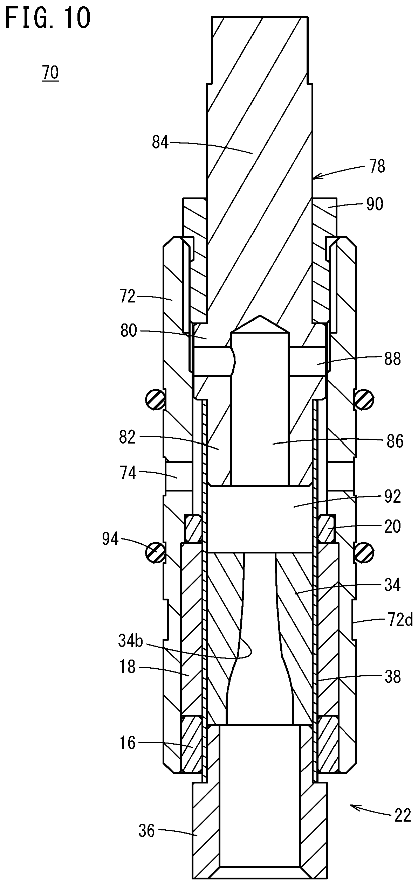

As shown in FIG. 8, when the flange portion 80 of the piston 78 abuts against the stopper 20, the amount of projection of the pad adapter 36 is maximized. As shown in FIG. 10, when the flange portion 80 of the piston 78 abuts against the guide bush 90, the amount of projection of the pad adapter 36 is minimized.

The body 72 according to the third embodiment includes the third groove portion 72d for being supported on the robot arm or the transporting device, but a similar groove portion may be formed in the body 12 of the first embodiment.

The magnetic damper for the suction pad according to the present invention is not limited to the embodiments described above, but various configurations can be adopted therein without deviating from the essence and gist of the present invention.

## Claims

1. A magnetic damper (10, 50, 70) for a suction pad, comprising: a body (12, 72) having a tubular shape; and a movable portion (22) supported by the body so as to be displaceable in an axial direction of the body, the magnetic damper for the suction pad being configured to mitigate pressure when the suction pad comes into contact with a workpiece, the pressure being mitigated by a magnetic force acting between a fixed magnet (18) attached to the body and a movable magnet (34) constituting the movable portion, the fixed magnet and the movable magnet each having a tubular shape,
wherein an outer circumferential surface (18a) and an inner circumferential surface (18b) of the fixed magnet are formed of cylindrical surfaces having uniform diameters, respectively, an outer circumferential surface (34a) of the movable magnet is formed of a cylindrical surface having a uniform diameter, an inner circumferential surface (34b) of the movable magnet is formed of a conical curved surface, the fixed magnet and the movable magnet are magnetized in the axial direction, and a polarity of the fixed magnet in the axial direction is same as a polarity of the movable magnet in the axial direction.

2. The magnetic damper for the suction pad according to claim 1,
wherein a magnetic force acting in the axial direction between the fixed magnet and the movable magnet is constant regardless of displacement of the movable portion.

3. The magnetic damper for the suction pad according to claim 1, further comprising a mechanical rotation preventing mechanism configured to suppress rotation of the movable portion about an axis of the body.

4. The magnetic damper for the suction pad according to claim 3,
wherein the movable portion includes a piston (24, 54, 78) including a flange portion (28, 58, 80), a cross section of the flange portion has a polygonal configuration, a piston guide surface (14, 76) of the body includes a recessed portion (14a, 76a) configured to receive a projecting portion (28a, 58a, 80a) corresponding to each vertex of the cross section in the polygonal configuration of the flange portion, and the mechanical rotation preventing mechanism is constituted by the flange portion and the piston guide surface.

5. The magnetic damper for the suction pad according to claim 1,
wherein the movable portion includes a piston (24, 54, 78) and a pad adapter (36), the pad adapter projects from the body, and displacement of the movable portion in a direction in which an amount of projection of the pad adapter increases is restricted by the piston abutting against a stopper (20) mounted on the body.

6. The magnetic damper for the suction pad according to claim 1,
wherein the movable portion includes a piston (24, 54, 78), a pad adapter (36), and a piston tube (38), the movable magnet and the pad adapter are connected to the piston via the piston tube, and a vacuum passage (40, 66, 92) is formed inside the movable portion.

7. The magnetic damper for the suction pad according to claim 1,
wherein the movable portion includes a piston (24), a tube adapter (42) is attached to the body, and the tube adapter includes a main body portion (44) to which a tube is attached, and a vacuum inlet portion (46) inserted into a hole portion (26) of the piston via an O-ring (32).

8. The magnetic damper for the suction pad according to claim 7,
wherein the tube adapter includes a groove portion (44a) configured to release pressure in a back pressure chamber (48) defined by the body, the tube adapter, and the piston.

9. The magnetic damper for the suction pad according to claim 1,
wherein the movable portion includes a piston (54), a guide bush (64) is attached to the body, the piston includes a shaft portion (62) to which a tube is connected, and the shaft portion is inserted into the guide bush.

10. The magnetic damper for the suction pad according to claim 1,
wherein the movable portion includes a piston (78), the piston includes a vertical hole (86) that is a blind hole and a lateral hole (88) opening to a side surface of the piston, the vertical hole is connected to the lateral hole, the body includes a vacuum inlet hole (74), and the lateral hole communicates with the vacuum inlet hole.
